# EUROPEAN PATENT SPECIFICATION

(11) **EP 3 626 961 B1**
(45) Date of publication and mention of the grant of the patent: **24.08.2022**
(21) Application number: 18195367.0
(22) Date of filing: 19.09.2018
(51) Int. Cl.: B23K 1/00, B23K 1/20, F02M 69/46

(54) **METHOD FOR CREATING BUMPS, METHOD FOR JOINING COMPONENTS, INJECTOR CUP AND ARRANGEMENT**
VERFAHREN ZUR ERZEUGUNG VON HÖCKERN, VERFAHREN ZUR VERBINDUNG VON KOMPONENTEN, INJEKTORBECHER UND ANORDNUNG
PROCÉDÉ PERMETTANT DE CRÉER DES BOSSES, PROCÉDÉ D'ASSEMBLAGE DE COMPOSANTS, COUPELLE D'INJECTEUR ET AGENCEMENT

(43) Date of publication of application: 25.03.2020
(73) Proprietor: Vitesco Technologies GmbH, 93055 Regensburg (DE)
(72) Inventor: Ricci, Roberto, 57124 Livorno (IT)
(74) Representative: Vitesco Technologies

(56) References cited:
- EP-A2- 1 524 428
- ES-A1- 2 301 287
- JP-A- 2007 021 508
- US-A1- 2005 154 540

## Description

The present invention according to a first aspect refers to a method for creating bumps, wherein the method comprises: providing a first component having a first metallic surface area, creating bumps at the first component, wherein the bumps project beyond an infinite geometric plane which is spanned by the first metallic surface area. According to a second aspect the invention refers to a method for joining components to each other.

According to a third aspect the invention refers to an injector cup, preferably for an injection valve, in particular for injection of fuel into a combustion chamber of a cylinder of an internal combustion engine . The injector cup may have a face wall, a radially protruding wall and a laterial, preferably cylindrical, wall extending between the face wall and the radially protruding wall. Further, a first via hole may be provided in the face wall and the first metallic surface area may be located at the face wall at a side faced away from the radially protruding wall. The first metallic surface area may extend around the first via hole. Furthermore, according to a fourth aspect the invention refers to an arrangement, comprising an injector cup and a fuel rail.

US2005/154540A1 shows a method of determining plastic modulus. There is disclosed a method for creating pumps, wherein the method comprises: providing a first component having a first metallic surface area, creating bumps at the first component, wherein the bumps project beyond an infinite geometric plane which is spanned by the first metallic surface area. Further, providing a conical tool or a number of conical tools, wherein each bump is created by pressing a conical tool or one of the conical tools against the first component in a respective surface region of the first component.

ES2301287A1 shows a method, which involves measuring applied load curve depending on the depth of penetration. The curve between applied load and depth of penetration is intrinsically identical for the material intended as a solid. The method uses topographic measurements of the track, the value of the hardness or the youngs modulus to determine unequivocally that the two sets of properties actually correspond to intended material.

EP1524428A1 discloses an injector cup for an injection valve in particular for injection fuel into a combustion chamber of a cylinder of an internal combustion engine, wherein the injector cup comprises: a face wall, a radially protruding wall and a lateral wall extending between the face wall and the radially protruding wall wherein a first via hole is provided in the face wall, wherein a first metallic surface area is located at the face wall at a side face away from the radially protruding wall and wherein the first metallic surface area extends around the first via hole.

It is known in the technical field of brazing that it is recommendable before brazing to position the two metallic surfaces to be joined relative to each other so that a certain gap, i.e. a clearance of a preferred width remains between the relevant surfaces. If the clearance has the preferred width this enables the brazing filler material to enter into the gap between the two metallic surfaces from the outside in an inward direction by joining the metallic surfaces. On the other hand, if the two flat surfaces to be joined by brazing would be arranged in full contact with each other before brazing, such contact could "seal" the two components at their metallic contact surfaces which hence surface to be brazed. Further, in particular it is intended to provide a method for creating bumps which is applicable independent of a wall thickness of the component and hence which can be used irrespective of if the component is intended for low pressure application or high pressure application. In particular it is intended that the provided method can avoid at least some or all of the before-described drawbacks. According to the second aspect of the invention it is an underlying object to provide an improved method for joining components to each other, which in particular can avoid at least some or all of the before-described drawbacks of the prior art. In particular, it is an object to improve a method for enabling that an intended (i.e. correct) clearance between two flat surfaces is achieved before the brazing process. With regard to the third aspect of the invention it is an underlying object to provide an improved injector cup which is capable to be brazed to a fuel rail, for example. In particular, it is intended that the provided injector cup can avoid at least some or all of the before-described drawbacks. Regarding the fourth aspect of the invention it is an underlying object to provide an improved arrangement comprising an injector cup and a fuel rail which in particular can avoid at least some or all of the before-described drawbacks.

According to the first aspect in order to solve the object the invention suggests that the method for creating bumps comprises: providing a conical tool or a number of conical tools, wherein each bump is created by pressing a conical tool or one of the conical tools against the first component in a respective surface region of the first component.

The surface regions where a conical tool is pressed against the first component are preferably small in size compared to the first metallic surface area. It is preferred that before pressing a conical tool against a respective surface region, a center axis of the conical tool is arranged perpendicularly with regard to the respective surface region. This enables to create a concentric bump. The conical tool may be mounted for example at a handle or may be hold by a holding device of a machine or the like. The conical tool may be pressed against a respective surface region of the first component for example by a stroke of a hammer or by a machine or in any other appropriate manner. Preferably, the conical tool is pressed with its tapered end first against the first component.

Hence, the invention proposes to solve the underlying object by creating some bumps on preferably only one of the two surfaces by pressing a conical tool against a respective surface region in order to obtain a material shift. Hence, with regard to an intended brazing operation the invention enables to prepare at least one of the two surfaces before brazing so that an intended clearance which is needed for the brazing process can be achieved without machining, especially without chip removal by machining like for example drilling, milling, turning, etc. As an additional advantage the invention can also be used with high thickness material, because the deformation to create the respective bumps is directly created on that side of the component where also the contact surface area for brazing is situated. For example, if the first component is an injector cup for high pressure applications, the bumps can be created directly at an outside of the injector cup, preferably in surface regions which are surrounded by the first metallic surface area which is intended to be joined to a second component by brazing. Regarding a wall of a component where a surface for brazing is situated, according to the invention it is not necessary to deform the wall including its complete thickness by pressing to the wall at the side opposite to the intended bumps; rather, the invention suggests to create the intended bumps directly on that side of the wall where also the surface for brazing is situated. In consequence, the method for preparing the bumps is simplified. As an additional advantage, the invention can also be applied to walls having any desirable wall thickness. The invention can be applied to low and high pressure applications, but it is even reasonable to use the invention for high thickness material in order to have a more reliable process due to a higher thickness used. For example, the invention may be used for creating bumps at an injector cup (which for example may be intended for high pressure applications) which has a minimum wall thickness of 1.5 mm stainless steel. Furthermore, whereas the invention is preferred for creating bumps for brazing, the invention could also be used in all other applications where it is necessary or preferred to have a little clearance between two flat surfaces.

There are many possibilities for performing preferred modifications:
For example, it is possible that the bumps are created in surface regions of the first component which are spaced from each other, either by providing a conical tool and by pressing the conical tool against the first component successively in respectively one of the surface regions which are spaced from each other and/or by providing a number of conical tools and by pressing the conical tools against the first component simultaneously, wherein each of the conical tools is pressed individually against one of the surface regions which are spaced from each other. For example, the bumps can be obtained altogether with "one punch shot". For example, it can be used a punching tool having a minimum of three conical tools (i.e. tips) which for example may be spaced from each other by angles of 120 degrees. In an example, the first component is an injector cup and the bumps can be created all together with "one punch shot" (punching tool with a minimum of 3 tips/conical tools at 120 degree) during the cup molding or with three shots with a single tip (single conical tool) with cup rotation, or also in a second time with manual operations, for example by punching with a hammer and a conical tool. It is possible to press a conical tool against a selected surface region a second time, for example by manual operation.

It is preferred that the first metallic surface area is a flat surface. Further, it is preferred that the surface regions, which are selected to press the conical tool or the conical tools against the first component, are surrounded by the flat first metallic surface area of the first component wherein said selected surface regions and said flat surrounding first metallic surface area together form a continuous flat surface before the bumps are created. Preferably the selected surface regions are small compared to the first metallic surface area. Consequently, after creating the bumps they may be encircled by the surrounding flat first metallic surface area. Alternatively, the respective surface regions for pressing a conical tool against the first component may be situated at the first component outside of the flat first metallic surface area.

According to the invention, the first component is an injector cup, wherein the first metallic surface area is located at an outside of a face wall of the injector cup and extends around a first via hole which is provided in the face wall, or is a fuel rail which has a flat plane interface extending around a second via hole, wherein the second metallic surface area is located at a surface of the flat plane interface and extends around the second via hole.

It is also preferred that, if the first component is the injector cup, bumps are located along a circumference around the first via hole and are spaced from each other in the circumference direction by even distance angles, or, if the first component is the fuel rail, that bumps are located along a circumference around the second via hole and are spaced from each other in the circumference direction by even distance angles. For example, if four bumps are located along the circumference, each pair of neighboured bumps may be spaced by an angle of 90 degrees. In another example, if only three bumps are located along the circumference, each pair of neighboured bumps may be spaced by an angle of 120 degrees. Preferably, perpendicular to the infinite geometric plane each bump has a height which is in a range between 0.08 and 0.12 mm and which in particular is about 0.1 mm or 0.1 mm. The direction of the height is perpendicular to the infinite geometric plane. The term about may include positive or negative deviations of up to 10 percent. In some typical situations bumps for the brazing process must guarantee a clearance of 0.1 mm, necessary for the complete penetration of the brazing paste. This for example also may apply for an injector cup and a fuel rail to be joined by brazing at their respective metallic contact surfaces. The invention suggests to create bumps at surface regions which are surrounded by the metallic surface area of the injector cup in order to achieve the intended clearance between both contact surfaces for the brazing process.

It is preferred that the first component comprises a first wall section, wherein the bumps are located at a wall surface of the first wall section, wherein at the positions of the bumps a wall thickness of the wall section is at least 1.5 mm. The term about may include positive or negative deviations of up to 10 percent. Preferably, a respective bump is created by a material shift which is achieved by pressing the conical tool in the respective surface region wherein in particular a respective bump is created by pressing a conical tool only one-time. It is preferred that that a respective bump has a shape of a ring and extends around a central crater, wherein the crater has a depth with regard to the infinite geometric plane and wherein the depth in particular is in range between 0.1 and 0.5 mm.

According to the second aspect in order to solve the underlying object the invention suggests that the method for joining components to each other comprises steps of the above-described method for creating bumps and in addition the following steps: providing a second component having a second metallic surface area, arranging the first component und the second component relative to each other so that the first metallic surface area and the second metallic surface area face each other and so that the bumps contact the second component, in particular at the second metallic surface area, resulting in a clearance between the first metallic surface area and the second metallic surface area, and thereafter joining the first metallic surface area and the second metallic surface area by brazing. Regarding possible effects and advantages reference is made to the above description.

Preferably the first metallic surface area is a plane and the second metallic surface area is a plane. As a possible generalization, the invention also comprises a method wherein bumps are created at a first component as described above and wherein the first component is arranged relative to a second component so that the bumps contact the second component for providing a certain clearance between the first and the second components, however, without a brazing process. In other words, the invention can be used not only for brazing, but in all applications where it is necessary to have a little clearance between two (in particular flat) surfaces.

Regarding the second aspect of the invention, there are many possibilities for performing preferred modifications:
It is preferred that the second metallic surface area is a flat surface and/or that before joining the first metallic surface area and the second metallic surface area by brazing the clearance has a width of 0.1 mm or about 0.1 mm. In an example, the second component is a fuel rail having a flat plane interface, wherein the flat plane interface extends around a second via hole and wherein the second metallic surface area is located at a surface of the flat plane interface and extends around the second via hole. In an alternative, the second component may be an injector cup having a face wall, wherein the face wall extends around a first via hole and wherein the first metallic surface area is located at a surface of the face wall and extends around the first via hole.

According to the third aspect in order to solve the object the invention suggests that the injector cup is manufactured by using a method for creating bumps as described in this application and/or that an injector cup comprises a number of bumps created in surface regions which are spaced from each other and which are surrounded by the first metallic surface area, wherein each bump is integrally formed with the face wall and projects beyond an infinite geometric plane which is spanned by the first metallic surface area, wherein in particular a respective bump has a shape of a ring and extends around a central crater. Regarding possible effects and advantages reference is made to the above description. The injector cup may be in accordance to one or more of the features as described above with regard to a method. For example, it is preferred that the injector cup may have a wall thickness which is at least 1.5 mm in order to adapt the injector cup to an injection valve for high pressure applications. According to another aspect the invention refers also to a fuel rail which is manufactured by a method in accordance to the present invention; the fuel rail may be in accordance to one or more of the features as described with regard to a method for creating bumps in accordance to the invention. Regarding possible effects and advantages reference is made to the above description.

According to the fourth aspect regarding an arrangement which comprises an injector cup and a fuel rail in order to solve the object the invention suggests that the injector cup is an injector cup according the present invention, wherein the fuel rail has a flat plane interface extending around a second via hole, wherein the second metallic surface area is located at a surface of the flat plane interface and extends around the second via hole, wherein the injector cup and the fuel rail are arranged relative to each other so that the first metallic surface area and the second metallic surface area face each other and so that the first via hole and the second via hole are aligned with each other, wherein the bumps of the injector cup contact the second metallic surface area of the fuel rail, and wherein the first metallic surface area and the second metallic surface area are joined by brazing filler material which continuously extends around an axis extending along the first via hole and the second via hole. Regarding possible effects and advantages reference is made to the above description.

Exemplary embodiments of the aspects of the present invention will now be described with reference to the accompanying drawings. These are as follows:
- Fig. 1: is a cross section of an exemplary embodiment of an injector cup which for example may be used for the inventive method for creating bumps;
- Fig. 2: is a perspective view of the injector cup shown in Fig. 1;
- Fig. 3: is a cross section of the injector cup shown by Figs. 1 and 2 after creating bumps by a preferred embodiment of a method for creating bumps according to the present invention;
- Fig. 4: is a perspective view of an exemplary embodiment of an injector cup in accordance to the third aspect of the invention, which has been prepared by a preferred embodiment of the method for creating bumps in accordance to the invention;
- Fig. 5: is an enlarged cross section of a metallic surface of a component wherein a bump has been created according to a preferred embodiment of the invention and is a cross section of a conical tool;
- Fig. 6: is an enlarged partial cross section of the injector cup shown in Fig. 4;
- Fig. 7: is an enlarged partial cross section of a preferred embodiment of an arrangement, comprising an injector cup and a fuel rail, according to the fourth aspect of the invention, before brazing;
- Fig. 8: is the arrangement shown in Fig. 7, however shown after brazing; and
- Fig. 9: a photo showing a section of a preferred embodiment of an injector cup having a bump in accordance to the present invention.

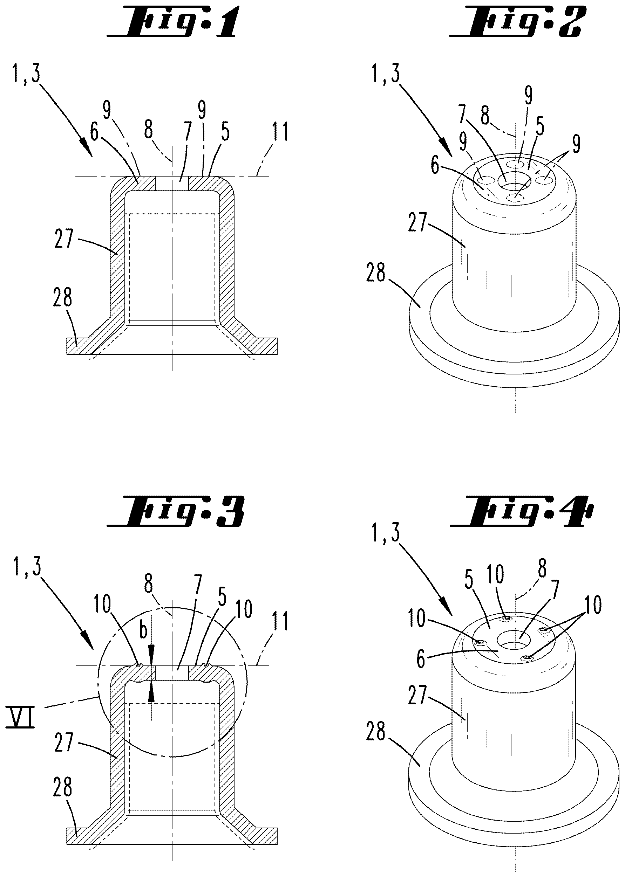

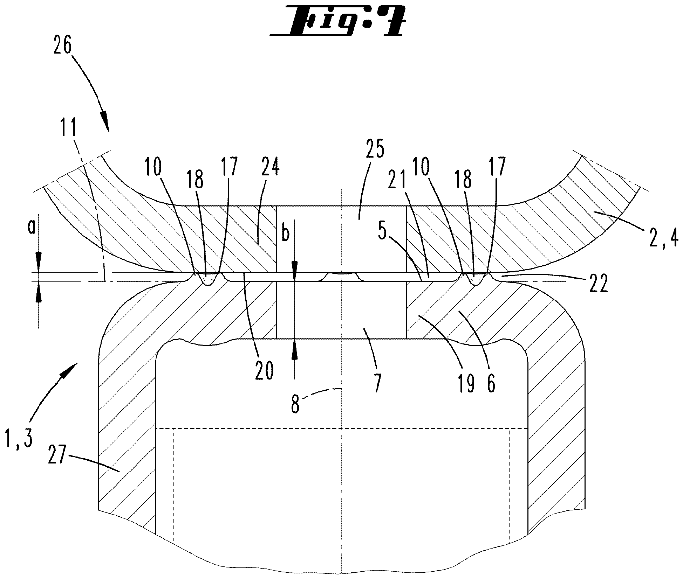

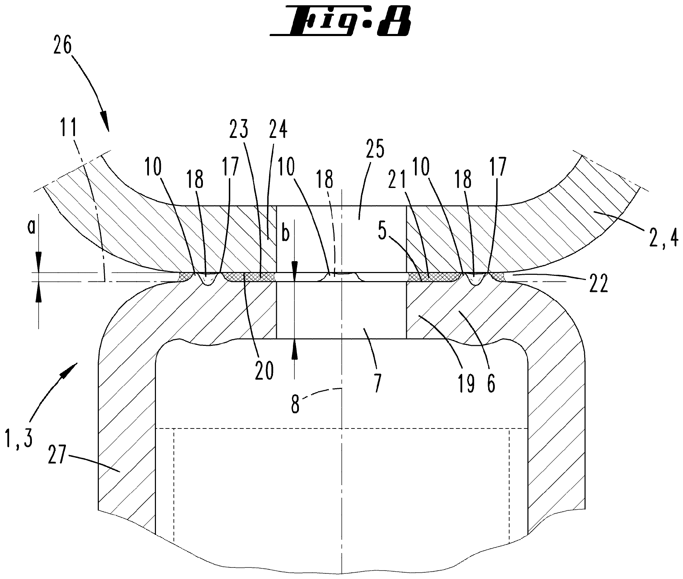

In Figs. 1 and 2 it is shown a first component 1, which by way of example is intended to be joined by brazing to a second component 2, as depicted by the partial cross sections of Figs. 7 and 8. In the example, the first component 1 is an injector cup 3 and the second component 2 is a fuel rail 4. The injector cup 3 as shown by Figs. 1 and 2 can be used for performing a method for creating bumps in accordance to the first aspect of the invention. The first component 1, i.e. in the example the injector cup 3, has a first metallic surface area 5 which in the example is located at the outer side of a face wall 6 of the injector cup 3 and which extends around a first via hole 7 which extends through the face wall 6 along a center axis 8.

In Fig. 2 it is shown schematically by dotted lines that on performing a preferred embodiment of the method for creating bumps according to the invention four surface regions 9 are selected for creating bumps 10 as shown by Fig. 4. In the example, the surface regions 9 are surrounded by the flat first metallic surface area 5, and before creating the bumps the selected surface regions 9 and the flat surrounding first metallic surface area 5 together form a continuous flat surface, as shown by Figs. 1 and 2. As further depicted, an infinite geometric plane 11 which is to be understood as a geometric reference plane is spanned by the first metallic surface area 5. In the example shown by Figs. 1 and 2 also the selected surface regions 9 extend within the infinite geometric plane 11 so that there is no visible boundary between the first metallic surface area 5 and the surface regions 9. Depending on the individual requirements, differing from Fig. 2 other surface regions 9 may be selected for creating bumps 10; in particular a different number and/or different positions of the surface regions 9 may be selected. As shown by Fig. 2 it is preferred that the selected surface regions 9 are encircled by the surface region 9. However, alternatively it would be possible that the surface regions 9 are situated outside of the first metallic surface area 5. As shown by the figures, the injector cup 3 comprises a cylindrical lateral wall 27 and a radially protruding wall 28. The injector cup 3 is integrally formed wherein the lateral wall 27 extends from the face wall 6 to the wall 28. The first metallic surface area 5 is located at an outside of the face wall 6, i.e. at a side which is faced away from the wall 28.

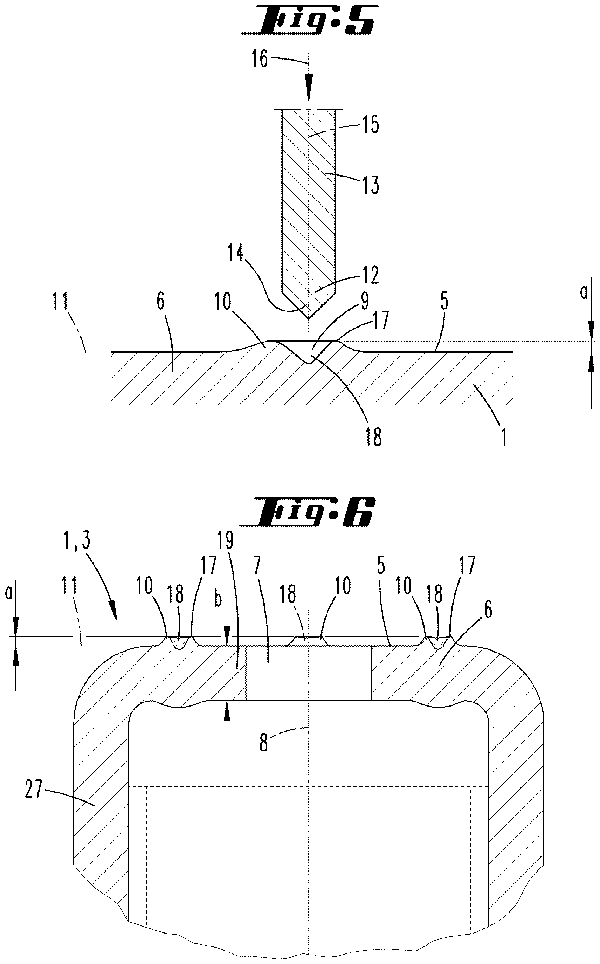

As it is schematically shown by Fig. 5, for performing the method in accordance to the invention a conical tool 12 is provided for creating the bumps 10. In the example the conical tool 12 is integrally connected to a handle 13. The handle 13 may be used for holding by a person and for aligning the conical tool 12 with regard to a surface region 9 for creating a bump 10. As shown by Fig. 5 schematically, for creating the bump 10 in the surface region 9 the conical tool 12 with its tapered end 14 first has been pressed against the flat surface region 9 (which is superimposed in Fig. 5 by a dotted line) along its axial center line 15 by transferring a force 16 directed to-wards the first component 1. The force 16 e.g. may be the result of a single stroke by a hammer (not shown in Fig. 5) or the like. In the example, the axial center line 15 of the conical tool 12 has been aligned perpendicular to the surface region 9 (i.e. also perpendicular to the infinite geometric plane 11). In result by the stroke a concentric bump 10 has been created. The bump 10 has a shape of a ring 17 around a central crater 18. Perpendicular to the infinite geo-metric plane 11 the ring 17 of the bump 10 has a height "a" of 0.1 mm in the example. The ring 17 pro-jects beyond the infinite geometric plane 11 in a direction away from the first component 1. From Fig. 5 a skilled person will understand that the bump 10 is created by a local material shift at the surface of the first component 1 which is achieved by pressing the conical tool 12 against the first component 1 in the surface region 9. In the example, the bump 10 is created in only one shot.

Figs. 3 and 4 depict the injector cup 3 of Figs. 1 and 2 after creating four bumps 10 as described before. In the example, the bumps 10 are located spaced from each other along a circumference around the first via hole 7. In more detail, the four bumps 10 are spaced from each other in the circumference direction by equal distance angles of ninety degrees, respectively. In the example, the four bumps 10 are created by providing only one conical tool 12 and by pressing said conical tool 12 against the injector cup 3 successively in respectively one of the surface regions 9 which are spaced from each other.

As shown by Fig. 3 the bumps 10 are created at the surface of a first wall section 19, wherein at the positions of the bumps 10 a wall thickness "b" of the wall section 19 is at least 1.5 mm, e.g. 1.6 mm.

Figs. 7 and 8 depict a preferred embodiment of an arrangement 26 in accordance to the fourth aspect of the invention. The arrangement 26 may be created by a preferred embodiment of a method for joining components to each other according to the third aspect of the invention. Such method may comprise the steps of the method for creating bumps 10 according to the first aspect of the invention described before. In addition, such method may comprise the step of providing a second component 2 which in the example is a fuel rail 4 as mentioned above. In Figs. 7 and 8 only a section of the cross section of the second component 2 is shown. The second component 2, i.e. the fuel rail 4, comprises a flat second metallic surface area 20. On performing the method the first component 1 and the second component 2 have been arranged relative to each other so that the first metallic surface area 5 and the second metallic surface area 20 face each other and so that the bumps 10 contact the second component 2 within the second metallic surface area 20. Hence, between the first metallic surface area 5 and the second metallic surface area 20 a clearance 21 results. A width of the clearance 21 corresponds to the height a of the bumps 10 with regard to the infinite geometric plane 11. In other words, in an exemplary way of performing the method before brazing the second component 2 may be supported on the first component 1 by means of the bumps 10.

Starting from the situation shown by Fig. 7, the first component 1 and the second component 2 may be joined by brazing, as depicted by Fig. 8. For this purpose a brazing filler material may be heated to achieve flowable properties and may be supplied to an outer rim 22 of the clearance 21. Because the clearance 21 has an appropriate width (according to the height "a") the molten brazing filler material 23 (e.g. a brazing paste) can penetrate into the complete circular clearance 21 provided between the metallic surface areas 5, 20. By this way the first metallic surface area 5 and the second metallic surface area 20 are joined by brazing.

In the example, the fuel rail 4 has a flat plane interface 24, which extends around a second via hole 25. The second metallic surface 20 is located at an outer side of the flat plane interface 24 and extends around the second via hole 25. As shown by Fig. 8, the brazing filler material 23 also provides a sealing between the first component 1 and second component 2 with regard to the fluid connection provided by the via holes 7 and 25.

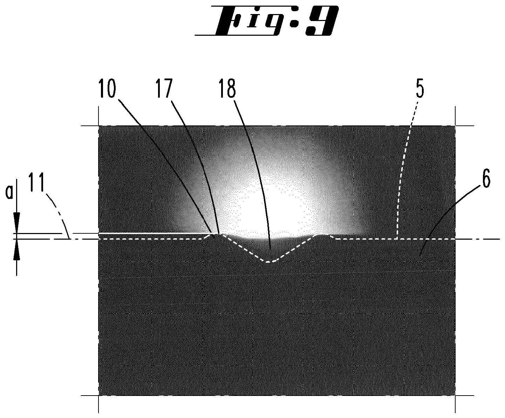

Fig. 9 depicts a photo showing a section of a preferred embodiment of an injector cup having a bump in accordance to the present invention. Some reference numbers have been added to the photo. The picture represents a possible effect of the invention on a real part; the photo depicts an external metallic surface area 5 situated at a face wall 6 of an injector cup 3 in the region of a bump 10 created on using the present invention. The photo has been taken by a profile projector, and the shown bump 10 has a height of 0.1 mm in the example. Like in the other figures, the bump 10 has been created on using a conical tool 12 and a hammer for punching.

### List of references

- 1: first component
- 2: second component
- 3: injector cup
- 4: fuel rail
- 5: first metallic surface area
- 6: face wall
- 7: first via hole
- 8: center axis
- 9: surface region
- 10: bumps
- 11: infinite geometric plane
- 12: conical tool
- 13: handle
- 14: tapered end
- 15: axial outer line
- 16: force
- 17: ring
- 18: crater
- 19: wall section
- 20: second metallic surface area
- 21: clearance
- 22: rim
- 23: brazing filler material
- 24: flat plane interface
- 25: second via hole
- 26: arrangement
- 27: lateral wall
- 28: wall
- a: height
- b: wall thickness

## Claims

1. Method for creating bumps (10), wherein the method comprises:
providing a first component (1) having a first metallic surface area (5),
creating bumps (10) at the first component (1), wherein the bumps (10) project beyond an infinite geometric plane (11) which is spanned by the first metallic surface area (5), providing a conical tool (12) or a number of conical tools (12), wherein
each bump (10) is created by pressing a conical tool (12) or one of the conical tools (12) against the first component (1) in a respective surface region (9) of the first component (1), **characterized in that** the first component is an injector cup, wherein the first metallic surface area (5) is located at an outside of a face wall (6) of the injector cup (3) and extends around a first via hole (7) which is provided in the face wall (6), or that the first component is a fuel rail (4) which has a flat plane interface extending around a second via hole, wherein the second metallic surface area is located at a surface of the flat plane interface and extends around the second via hole.

2. Method for creating bumps (10) according to claim 1, **characterized in that** the bumps (10) are created in surface regions (9) of the first component (1) which are spaced from each other,
either by providing a conical tool (12) and by pressing the conical tool (12) against the first component successively in respectively one of the surface regions (9) which are spaced from each other
and/or by providing a number of conical tools (12) and by pressing the conical tools (12) against the first component (1) simultaneously, wherein each of the conical tools (12) is pressed individually against one of the surface regions (9) which are spaced from each other.

3. Method for creating bumps (10) according to any of claims 1-2, **characterized in that** the first metallic surface area is a flat surface.

4. Method for creating bumps (10) according to any of claims 1-3, **characterized in that** the surface regions (9), which are selected to press the conical tool (12) or the conical tools (12) against the first component (1), are surrounded by the flat first metallic surface area (5) of the first component (1) wherein said selected surface regions (9) and said flat surrounding first metallic surface area (5) together form a continuous flat surface before the bumps (10) are created.

5. Method for creating bumps (10) according to any of claims 1 - 4, **characterized in that**, if the first component (1) is the injector cup (3), bumps (10) are located along a circumference around the first via hole (7) and are spaced from each other in the circumference direction by even distance angles, or, if the first component (1) is the fuel rail (4), that bumps (10) are located along a circumference around the second via hole and are spaced from each other in the circumference direction by even distance angles.

6. Method for creating bumps (10) according to any of claims 1-5, **characterized in that** perpendicular to the infinite geometric plane (11) each bump (10) has a height (a) which is in a range between 0.08 and 0.12 mm and which in particular is about 0.1 mm or 0.1 mm and/or **characterized in that** the first component (1) comprises a first wall section (19), wherein the bumps (10) are located at a wall surface of the first wall section (19), wherein at the positions of the bumps (10) a wall thickness (b) of the wall section is at least 1.5 mm.

7. Method for creating bumps (10) according to any of claims 1-6, **characterized in that** a respective bump (10) is created by a material shift which is achieved by pressing the conical tool (12) in the respective surface region (9) wherein in particular a respective bump (10) is created by pressing a conical tool (12) only one-time.

8. Method for creating bumps (10) according to any of claims 1-7, **characterized in that** a respective bump (10) has a shape of a ring (17) and extends around a central crater (18), wherein the crater (18) has a depth with regard to the infinite geometric plane and wherein the depth in particular is in a range between 0.1 and 0.5 mm.

9. Method for joining components (1, 2) to each other, **characterized in that**
the method comprises the steps of a method for creating bumps (10) according to any of claims 1-9 and that the method further comprises the following steps:
providing a second component (2) having a second metallic surface area (20),
arranging the first component (1) and the second component (2) relative to each other so that the first metallic surface area (5) and the second metallic surface area (20) face each other and so that the bumps (10) contact the second component (2), in particular at the second metallic surface area (20), resulting in a clearance (21) between the first metallic surface area (5) and the second metallic surface area (20), and thereafter
joining the first metallic surface area (5) and the second metallic surface area (20) by brazing.

10. Method for joining components (1, 2) to each other according to claim 9, **characterized in that** the second metallic surface area (20) is a flat surface and/or that before joining the first metallic surface area (5) and the second metallic surface area (20) by brazing the clearance (21) has a width of 0.1 mm or about 0.1 mm.

11. Method for joining components (1, 2) to each other according to any of claims 9-10, **characterized in that** the second component (2) is a fuel rail (4) having a flat plane interface (24), wherein the flat plane interface (24) extends around a second via hole (25) and wherein the second metallic surface area (20) is located at a surface of the flat plane interface (24) and extends around the second via hole (25), or that the second component (2) is an injector cup (3) having a face wall (6), wherein the face wall (6) extends around a first via hole (7) and wherein the first metallic surface area (5) is located at a surface of the face wall (6) and extends around the first via hole (7).

12. Injector cup (3), preferably for an injection valve, in particular for injection of fuel into a combustion chamber of a cylinder of an internal combustion engine, wherein the injector cup comprises:
a face wall (6), a radially protruding wall (28) and a lateral wall (27) extending between the face wall (6) and the radially protruding wall (28) wherein a first via hole (7) is provided in the face wall (6),
wherein a first metallic surface area (5) is located at the face wall (6) at a side face away from the radially protruding wall (28) and wherein the first metallic surface area (5) extends around the first via hole (7),
**characterized in that**
the injector cup (3) comprises a number of bumps (10) created in surface regions (9) which are spaced from each other and which are surrounded by the first metallic surface area (5), wherein each bump (10) is integrally formed with the face wall (6) and projects beyond an infinite geometric plane (11) which is spanned by the first metallic surface area (5), wherein in particular a respective bump (10) has a shape of a ring (17) and extends around a central crater (18).

13. Injector cup (3), preferably for an injection valve, in particular for injection of fuel into a combustion chamber of a cylinder of an internal combustion engine, in particular according to claim 12,
**characterized in that** the injector cup (3) is manufactured by a method according to any of claims 1-9.

14. Arrangement (26), comprising an injector cup (3) and a fuel rail (4), **characterized in that** the injector cup (3) is an injector cup (3) according to any of claims 12 and 13, wherein the fuel rail (4) has a flat plane interface (24) extending around a second via hole (25), wherein the second metallic surface area (20) is located at a surface of the flat plane interface (24) and extends around the second via hole (25),
wherein the injector cup (3) and the fuel rail (4) are arranged relative to each other so that the first metallic surface area (5) and the second metallic surface area (20) face each other and so that the first via hole (7) and the second via hole (25) are aligned with each other,
wherein the bumps (10) of the injector cup (3) contact the second metallic surface area (20) of the fuel rail (4), and wherein the first metallic surface area(5) and the second metallic surface area (20) are joined by brazing filler material (23) which continuously extends around an axis extending along the first via hole (7) and the second via hole (25) .

## Patentansprüche

1. Verfahren zum Erzeugen von Höckern (10), wobei das Verfahren aufweist:
Bereitstellen einer ersten Komponente (1) mit einer ersten metallischen Oberfläche (5),
Erzeugen von Höckern (10) an der ersten Komponente (1), wobei die Höcker (10) über eine unbegrenzte geometrische Ebene (11) vorragen, die von der ersten metallischen Oberfläche (5) aufgespannt wird,
Bereitstellen eines konischen Werkzeugs (12) oder mehrerer konischer Werkzeuge (12), wobei
jeder Höcker (10) durch Drücken eines konischen Werkzeugs (12) oder eines der konischen Werkzeuge (12) gegen die erste Komponente (1) in einem entsprechenden Oberflächenbereich (9) der ersten Komponente (1) erzeugt wird,
**dadurch gekennzeichnet, dass** die erste Komponente ein Injektorbecher ist, wobei die erste metallische Oberfläche (5) an einer Außenseite einer Stirnwand (6) des Injektorbechers (3) angeordnet ist und um ein erstes Durchgangsloch (7) verläuft, das in der Stirnwand (6) bereitgestellt ist, oder dass die erste Komponente eine Kraftstoffverteilerleitung (4) ist, die eine flache ebene Kontaktfläche aufweist, die um ein zweites Durchgangsloch verläuft, wobei die zweite metallische Oberfläche an einer Oberfläche der flachen ebenen Kontaktfläche angeordnet ist und um das zweite Durchgangsloch verläuft.

2. Verfahren zum Erzeugen von Höckern (10) gemäß Anspruch 1,
**dadurch gekennzeichnet, dass** die Höcker (10) in Oberflächenbereichen (9) der ersten Komponente (1) erzeugt werden, die voneinander beabstandet sind,
entweder durch Bereitstellen eines konischen Werkzeugs (12) und aufeinanderfolgendes Drücken des konischen Werkzeugs (12) gegen die erste Komponente in jeweils einem der Oberflächenbereiche (9), die voneinander beabstandet sind,
und/oder durch Bereitstellen mehrerer konischer Werkzeuge (12) und gleichzeitiges Drücken der konischen Werkzeuge (12) gegen die erste Komponente (1), wobei jedes der konischen Werkzeuge (12) einzeln gegen einen der Oberflächenbereiche (9), die voneinander beabstandet sind, gedrückt wird.

3. Verfahren zum Erzeugen von Höckern (10) gemäß einem der Ansprüche 1-2, **dadurch gekennzeichnet, dass** die erste metallische Oberfläche eine flache Oberfläche ist.

4. Verfahren zum Erzeugen von Höckern (10) gemäß einem der Ansprüche 1-3, **dadurch gekennzeichnet, dass** die Oberflächenbereiche (9), die für das Drücken durch das konische Werkzeug (12) oder die konischen Werkzeuge (12) gegen die erste Komponente (1) ausgewählt werden, von der flachen ersten metallischen Oberfläche (5) der ersten Komponente (1) umgeben sind, wobei die ausgewählten Oberflächenbereiche (9) und die flache umgebende erste metallische Oberfläche (5) zusammen eine durchgehende flache Oberfläche bilden, bevor die Höcker (10) erzeugt werden.

5. Verfahren zum Erzeugen von Höckern (10) gemäß einem der Ansprüche 1-4, **dadurch gekennzeichnet, dass**, wenn die erste Komponente (1) der Injektorbecher (3) ist, Höcker (10) entlang eines Umfangs um das erste Durchgangsloch (7) angeordnet sind und in der Umfangsrichtung um gleiche Winkelabstände voneinander beabstandet sind, oder, wenn die erste Komponente (1) die Kraftstoffverteilerleitung (4) ist, Höcker (10) entlang eines Umfangs um das zweite Durchgangsloch angeordnet sind und in der Umfangsrichtung um gleiche Winkelabstände voneinander beabstandet sind.

6. Verfahren zum Erzeugen von Höckern (10) gemäß einem der Ansprüche 1-5, **dadurch gekennzeichnet, dass** senkrecht zu der unbegrenzten geometrischen Ebene (11) jeder Höcker (10) eine Höhe (a) aufweist, die in einem Bereich zwischen 0,08 und 0,12 mm liegt und die insbesondere etwa 0,1 mm oder 0,1 mm beträgt, und/oder **dadurch gekennzeichnet, dass** die erste Komponente (1) einen ersten Wandabschnitt (19) aufweist, wobei die Höcker (10) an einer Wandoberfläche des ersten Wandabschnitts (19) angeordnet sind, wobei an den Positionen der Höcker (10) eine Wanddicke (b) des Wandabschnitts wenigstens 1,5 mm beträgt.

7. Verfahren zum Erzeugen von Höckern (10) gemäß einem der Ansprüche 1-6, **dadurch gekennzeichnet, dass** ein entsprechender Höcker (10) durch eine Materialverschiebung erzeugt wird, die durch Drücken des konischen Werkzeugs (12) in den entsprechenden Oberflächenbereich (9) erzielt wird, wobei insbesondere ein entsprechender Höcker (10) durch nur einmaliges Drücken eines konischen Werkzeugs (12) erzeugt wird.

8. Verfahren zum Erzeugen von Höckern (10) gemäß einem der Ansprüche 1-7, **dadurch gekennzeichnet, dass** ein entsprechender Höcker (10) eine Form eines Rings (17) aufweist und um einen zentralen Krater (18) verläuft, wobei der Krater (18) eine Tiefe bezogen auf die unbegrenzte geometrische Ebene aufweist und wobei die Tiefe insbesondere in einem Bereich zwischen 0,1 und 0,5 mm liegt.

9. Verfahren zum Verbinden von Komponenten (1, 2) miteinander, **dadurch gekennzeichnet, dass**:
das Verfahren die Schritte eines Verfahrens zum Erzeugen von Höckern (10) gemäß einem der Ansprüche 1-9 aufweist und dass das Verfahren ferner die folgenden Schritte aufweist:
Bereitstellen einer zweiten Komponente (2) mit einer zweiten metallischen Oberfläche (20),
Anordnen der ersten Komponente (1) und der zweiten Komponente (2) relativ zueinander, so dass die erste metallische Oberfläche (5) und die zweite metallische Oberfläche (20) einander zugewandt sind und dass die Höcker (10) mit der zweiten Komponente (2) in Kontakt kommen, insbesondere an der zweiten metallischen Oberfläche (20), um einen Zwischenraum (21) zwischen der ersten metallischen Oberfläche (5) und der zweiten metallischen Oberfläche (20) zu ergeben, und anschließend
Verbinden der ersten metallischen Oberfläche (5) und der zweiten metallischen Oberfläche (20) durch Hartlöten.

10. Verfahren zum Verbinden von Komponenten (1, 2) miteinander gemäß Anspruch 9, **dadurch gekennzeichnet, dass** die zweite metallische Oberfläche (20) eine flache Oberfläche ist und/oder dass vor dem Verbinden der ersten metallischen Oberfläche (5) und der zweiten metallischen Oberfläche (20) durch Hartlöten der Zwischenraum (21) eine Breite von 0,1 mm oder etwa 0,1 mm aufweist.

11. Verfahren zum Verbinden von Komponenten (1, 2) miteinander gemäß einem der Ansprüche 9-10, **dadurch gekennzeichnet, dass** die zweite Komponente (2) eine Kraftstoffverteilerleitung (4) ist, die eine flache ebene Kontaktfläche (24) aufweist, wobei die flache ebene Kontaktfläche (24) um ein zweites Durchgangsloch (25) verläuft und wobei die zweite metallische Oberfläche (20) an einer Oberfläche der flachen ebenen Kontaktfläche (24) angeordnet ist und um das zweite Durchgangsloch (25) verläuft, oder dass die zweite Komponente (2) ein Injektorbecher (3) ist, der eine Stirnwand (6) aufweist, wobei die Stirnwand (6) um ein erstes Durchgangsloch (7) verläuft und wobei die erste metallische Oberfläche (5) an einer Oberfläche der Stirnwand (6) angeordnet ist und um das erste Durchgangsloch (7) verläuft.

12. Injektorbecher (3), vorzugsweise für ein Einspritzventil, insbesondere zum Einspritzen von Kraftstoff in eine Verbrennungskammer eines Zylinders eines Verbrennungsmotors, wobei der Injektorbecher aufweist:
eine Stirnwand (6), eine radial vorstehende Wand (28) und eine Seitenwand (27), die zwischen der eine Stirnwand (6) und der radial vorstehenden Wand (28) verläuft, wobei in der Stirnwand (6) ein erstes Durchgangsloch (7) bereitgestellt ist,
wobei eine erste metallische Oberfläche (5) an der Stirnwand (6) an einer von der radial vorstehenden Wand (28) weg gerichteten Seite angeordnet ist und wobei die erste metallische Oberfläche (5) um das erste Durchgangsloch (7) verläuft,
**dadurch gekennzeichnet, dass**
der Injektorbecher (3) mehrere Höcker (10) aufweist, die in Oberflächenbereichen (9) erzeugt sind, die voneinander beabstandet sind und die von der ersten metallischen Oberfläche (5) umgeben sind, wobei jeder Höcker (10) integral mit der Stirnwand (6) gebildet ist und über eine unbegrenzte geometrische Ebene (11) vorragt, die von der ersten metallischen Oberfläche (5) aufgespannt wird, wobei insbesondere ein entsprechender Höcker (10) eine Form eines Rings (17) aufweist und um einen zentralen Krater (18) verläuft.

13. Injektorbecher (3), vorzugsweise für ein Einspritzventil, insbesondere zum Einspritzen von Kraftstoff in eine Verbrennungskammer eines Zylinders eines Verbrennungsmotors, insbesondere gemäß Anspruch 12,
**dadurch gekennzeichnet, dass** der Injektorbecher (3) durch ein Verfahren gemäß einem der Ansprüche 1-9 hergestellt ist.

14. Anordnung (26), die einen Injektorbecher (3) und eine Kraftstoffverteilerleitung (4) aufweist, **dadurch gekennzeichnet, dass** der Injektorbecher (3) ein Injektorbecher (3) gemäß einem der Ansprüche 12 und 13 ist, wobei die Kraftstoffverteilerleitung (4) eine flache ebene Kontaktfläche (24) aufweist, die um ein zweites Durchgangsloch (25) verläuft, wobei die zweite metallische Oberfläche (20) an einer Oberfläche der flachen ebenen Kontaktfläche (24) angeordnet ist und um das zweite Durchgangsloch (25) verläuft,
wobei der Injektorbecher (3) und die Kraftstoffverteilerleitung (4) relativ zueinander so angeordnet sind, dass die erste metallische Oberfläche (5) und die zweite metallische Oberfläche (20) einander zugewandt sind und dass das erste Durchgangsloch (7) und das zweite Durchgangsloch (25) miteinander fluchten,
wobei die Höcker (10) des Injektorbechers (3) mit der zweiten metallischen Oberfläche (20) der Kraftstoffverteilerleitung (4) in Kontakt stehen und wobei die erste metallische Oberfläche (5) und die zweite metallische Oberfläche (20) durch Hartlöten von Füllmaterial (23), das kontinuierlich um eine Achse, die entlang des ersten Durchgangslochs (7) und des zweiten Durchgangslochs (25) verläuft, verbunden sind.

## Revendications

1. Procédé pour créer des bosses (10), le procédé comprenant :
la fourniture d'un premier composant (1) ayant une première zone de surface métallique (5),
la création de bosses (10) sur le premier composant (1), les bosses (10) faisant saillie au-delà d'un plan géométrique infini (11) qui est recouvert par la première zone de surface métallique (5),
la fourniture d'un outil conique (12) ou d'un certain nombre d'outils coniques (12),
chaque bosse (10) étant créée en pressant un outil conique (12) ou l'un des outils coniques (12) contre le premier composant (1) dans une région de surface respective (9) du premier composant (1),
**caractérisé en ce que** le premier composant est une coupelle d'injecteur, la première zone de surface métallique (5) étant située à l'extérieur d'une paroi frontale (6) de la coupelle d'injecteur (3) et s'étendant autour d'un premier trou de passage (7) qui est prévu dans la paroi frontale (6) ou **en ce que** le premier composant est une rampe d'injection (4) qui a une interface plane plate s'étendant autour d'un second trou de passage, la seconde zone de surface métallique étant située au niveau d'une surface de l'interface plane plate et s'étendant autour du second trou de passage.

2. Procédé pour créer des bosses (10) selon la revendication 1,
**caractérisé en ce que** les bosses (10) sont créées dans des régions de surface (9) du premier composant (1) qui sont espacées les unes des autres,
en prévoyant un outil conique (12) et en pressant l'outil conique (12) contre le premier composant successivement dans respectivement l'une des régions de surface (9) qui sont espacées les unes des autres
et/ou en fournissant un certain nombre d'outils coniques (12) et en pressant les outils coniques (12) contre le premier composant (1) simultanément, chacun des outils coniques (12) étant pressé individuellement contre une des régions de surface (9) qui sont espacées les unes des autres.

3. Procédé de création de bosses (10) selon l'une quelconque des revendications 1 et 2,
**caractérisé en ce que** la première zone de surface métallique est une surface plate.

4. Procédé de création de bosses (10) selon l'une quelconque des revendications 1 à 3,
**caractérisé en ce que** les régions de surface (9), qui sont sélectionnées pour presser l'outil conique (12) ou les outils coniques (12) contre le premier composant (1), sont entourées par la première zone de surface métallique plate (5) du premier composant (1), lesdites régions de surface sélectionnées (9) et ladite première zone de surface métallique plate environnante (5) formant ensemble une surface plate continue avant la création des bosses (10).

5. Procédé pour créer des bosses (10) selon l'une quelconque des revendications 1 à 4,
**caractérisé en ce que**, si le premier composant (1) est la coupelle d'injecteur (3), des bosses (10) sont situées le long d'une circonférence autour du premier trou de passage (7) et sont espacées les unes des autres dans la direction de la circonférence par des angles de distance réguliers, ou, si le premier composant (1) est la rampe d'injection (4), **en ce que** les bosses (10) sont situées le long d'une circonférence autour du second trou de passage et sont espacées les unes des autres dans la direction de la circonférence par des angles de distance réguliers.

6. Procédé de création de bosses (10) selon l'une quelconque des revendications 1 à 5, **caractérisé en ce que** perpendiculairement au plan géométrique infini (11), chaque bosse (10) a une hauteur (a) qui est dans une plage comprise entre 0,08 et 0,12 mm, et qui est en particulier d'environ 0,1 mm ou 0,1 mm et/ou **caractérisé en ce que** le premier composant (1) comprend une première section de paroi (19), les bosses (10) étant situées sur une surface de paroi de la première section de paroi (19), aux positions des bosses (10) une épaisseur de paroi (b) de la section de paroi étant d'au moins 1,5 mm.

7. Procédé de création de bosses (10) selon l'une quelconque des revendications 1 à 6, **caractérisé en ce qu'**une bosse respective (10) est créée par un déplacement de matière qui est obtenu en pressant l'outil conique (12) dans la région de surface respective (9), en particulier une bosse respective (10) étant créée en pressant un outil conique (12) seulement une fois.

8. Procédé de création de bosses (10) selon l'une quelconque des revendications 1 à 7, **caractérisé en ce qu'**une bosse respective (10) a la forme d'un anneau (17) et s'étend autour d'un cratère central (18), le cratère (18) ayant une profondeur par rapport au plan géométrique infini et la profondeur étant en particulier dans une plage comprise entre 0,1 et 0,5 mm.

9. Procédé pour assembler des composants (1, 2) l'un à l'autre, **caractérisé en ce que**
le procédé comprend les étapes d'un procédé de création de bosses (10) selon l'une quelconque des revendications 1 à 9 et **en ce que** le procédé comprend en outre les étapes suivantes :
fournir un second composant (2) ayant une seconde zone de surface métallique (20),
agencer le premier composant (1) et le second composant (2) l'un par rapport à l'autre de sorte que la première zone de surface métallique (5) et la seconde zone de surface métallique (20) se font face et de sorte que les bosses (10) entrent en contact avec le second composant (2), en particulier au niveau de la seconde zone de surface métallique (20), ce qui entraîne un jeu (21) entre la première zone de surface métallique (5) et la seconde zone de surface métallique (20), et ensuite
assembler la première zone de surface métallique (5) et la seconde zone de surface métallique (20) par brasage.

10. Procédé pour assembler des composants (1, 2) l'un à l'autre selon la revendication 9, **caractérisé en ce que** la seconde zone de surface métallique (20) est une surface plate et/ou **en ce qu'**avant d'assembler la première zone de surface métallique (5) et la seconde zone de surface métallique (20) par brasage, le jeu (21) a une largeur de 0,1 mm ou d'environ 0,1 mm.

11. Procédé pour assembler des composants (1, 2) l'un à l'autre selon l'une quelconque des revendications 9 et 10, **caractérisé en ce que** le second composant (2) est une rampe d'injection (4) ayant une interface plane plate (24), l'interface plane plate (24) s'étendant autour d'un second trou de passage (25) et la seconde zone de surface métallique (20) étant située au niveau d'une surface de l'interface plane plate (24) et s'étendant autour du second trou de passage (25), ou **en ce que** le second composant (2) est une coupelle d'injecteur (3) ayant une paroi frontale (6), la paroi frontale (6) s'étendant autour d'un premier trou de passage (7) et la première zone de surface métallique (5) étant située au niveau d'une surface de la paroi frontale (6) et s'étendant autour du premier trou de passage (7).

12. Coupelle d'injecteur (3), de préférence pour une soupape d'injection, en particulier pour l'injection de carburant dans une chambre de combustion d'un cylindre d'un moteur à combustion interne, la coupelle d'injecteur comprenant :
une paroi frontale (6), une paroi faisant saillie radialement (28) et une paroi latérale (27) s'étendant entre la paroi frontale (6) et la paroi faisant saillie radialement (28), un premier trou de passage (7) étant prévu dans la paroi frontale (6),
une première zone de surface métallique (5) étant située sur la paroi frontale (6) au niveau d'une face latérale éloignée de la paroi faisant saillie radialement (28), et la première zone de surface métallique (5) s'étendant autour du premier trou de passage (7),
**caractérisée en ce que**
la coupelle d'injecteur (3) comprend un certain nombre de bosses (10) créées dans des régions de surface (9) qui sont espacées les unes des autres et qui sont entourées par la première zone de surface métallique (5), chaque bosse (10) étant formée d'un seul tenant avec la paroi frontale (6), et faisant saillie au-delà d'un plan géométrique infini (11) qui est recouvert par la première zone de surface métallique (5), en particulier une bosse respective (10) ayant une forme d'anneau (17) et s'étendant autour d'un cratère central (18).

13. Coupelle d'injecteur (3), de préférence pour un injecteur, en particulier pour l'injection de carburant dans une chambre de combustion d'un cylindre d'un moteur à combustion interne, en particulier selon la revendication 12,
**caractérisée en ce que** la coupelle d'injecteur (3) est fabriquée par un procédé selon l'une quelconque des revendications 1 à 9.

14. Agencement (26), comprenant une coupelle d'injecteur (3) et une rampe d'injection (4), **caractérisé en ce que** la coupelle d'injecteur (3) est une coupelle d'injecteur (3) selon l'une quelconque des revendications 12 et 13,
la rampe d'injection (4) ayant une interface plane plate (24) s'étendant autour d'un second trou de passage (25), la seconde zone de surface métallique (20) étant située sur une surface de l'interface plane plate (24) et s'étendant autour du second trou de passage (25),
la coupelle d'injecteur (3) et la rampe d'injection (4) étant agencées l'une par rapport à l'autre de sorte que la première zone de surface métallique (5) et la seconde zone de surface métallique (20) se font face et de sorte que le premier trou de passage (7) et le second trou de passage (25) sont alignés l'un avec l'autre,
les bosses (10) de la coupelle d'injecteur (3) étant en contact avec la seconde zone de surface métallique (20) de la rampe d'injection (4), et
la première zone de surface métallique (5) et la seconde zone de surface métallique (20) étant assemblées par un matériau d'apport de brasage (23) qui s'étend de manière continue autour d'un axe s'étendant le long du premier trou de passage (7) et du second trou de passage (25).
